# EUROPÄISCHE PATENTANMELDUNG

(11) **EP 1 345 445 A1**
(43) Veröffentlichungstag der Anmeldung: **17.09.2003**
(21) Anmeldenummer: 02405185.6
(22) Anmeldetag: 11.03.2002
(51) Int. Cl.: H04N 7/18, G08B 15/00

(54) **Raumüberwachung im Bereich eines Aufzugs mittels 3-D Sensor**

(71) Anmelder: INVENTIO AG, CH-6052 Hergiswil (CH)
(72) Erfinder: Deplazes, Romeo, 6330 Cham (CH); Cortona, Elena, 8037 Z-rich (CH)

(57) **Zusammenfassung**

Vorrichtung zur Überwachung eines Aufzugbereiches mit einem 3-D Halbleitersensor (79) zum Erfassen von dreidimensionaler Bildinformation. Der Halbleitersensor (79) umfasst eine Lichtquelle, die so montiert ist, dass sich der zu überwachende Aufzugbereich im beleuchteten Bereich der Lichtquelle befindet, eine Sensorgruppe, die derart montiert ist, dass sie reflektiertes Licht empfängt, und einen Verarbeitungschip zum Umwandeln der elektrischen Signale in Bildinformation. Zusätzlich weist die Vorrichtung eine Verarbeitungseinrichtung (80) auf, die mit dem Halbleitersensor (79) in Verbindung steht, um dreidimensionale Bildinformation verfügbar zu machen. Die Verarbeitungseinrichtung (80) verarbeitet die Bildinformation, um Zustandsinformation zu gewinnen, die den Zustand des zu überwachenden Aufzugbereichs repräsentiert.

## Beschreibung

Gegenstand der Erfindung ist eine Vorrichtung zur Überwachung eines Aufzugbereiches, nach dem Oberbegriff des Anspruchs **1**, ein Verfahren zur Bereichsüberwachung nach dem Oberbegriff des Anspruchs **12**, sowie ein Softwaremodul zur Bereichsüberwachung nach dem Oberbegriff des Anspruchs **16**.

Aufzugssysteme weisen mindestens eine Aufzugkabine auf, die in einem Aufzugschacht, oder frei entlang einer Transportvorrichtung bewegbar ist. Normalerweise wird die Aufzugkabine von Etage zu Etage bewegt, um dort Personen ein- bzw. aussteigen zu lassen, oder um dort be- bzw. entladen zu werden.

Der Innenraum der Aufzugkabine, aber auch der dem Aufzugschacht vorgelagerte Zugangsbereich ist besonders kritisch, da es zum Beispiel bei Fehlfunktionen des Aufzugs zu Personengefährdungen kommen kann. Als ein Beispiel sei das Öffnen einer Schachttüre genannt, obwohl sich keine Aufzugkabine hinter der sich öffnenden Schachttüre befindet. Es kann zum Beispiel auch zu Einklemmungen im Türbereich kommen.

Es ist auch denkbar, dass das Fehlverhalten einer Person, die Fehlmanipulation des Aufzugs oder das unfachmännische Be- bzw. Entladen des Aufzugs zu Problemen führt.

Es ist daher eine Tendenz zu verzeichnen, diese kritischen Bereiche zu überwachen, um Probleme frühzeitig erkennen zu können und insbesondere die Gefährdung von Personen zu vermeiden.
Häufig werden zur Überwachung der Türen eines Aufzugs mechanische, magnetische, induktive oder ähnliche Schalter eingesetzt. Zusätzlich kommen optische Systeme, wie zum Beispiel Lichtschranken oder Lichtgitter, zum Einsatz. Mit derartigen Ansätzen kann der Aufzugsteuerung gewisse Information - zum Beispiel über den Zustand der Türen - zugeführt werden. Der Informationsgehalt ist jedoch relativ begrenzt, da ein Schalter zum Beispiel nur zwei Zustände (digitale Information, ob Türe offen oder geschlossen ist) anzuzeigen in der Lage ist. Derartige Überwachungslösungen beschränken sich doch vorwiegend auf das unmittelbare Umfeld der Kabinen- und/oder Schachttüren.

Um ein komplexeres Überwachungssystem aufbauen zu können, braucht es zum Beispiel eine Kombination mehrerer Schalter und Lichtschranken.

Insbesondere die optischen Systeme weisen gewisse Vorteile auf, da sie im Gegensatz zu mechanischen Lösungen berührungslos arbeiten und keinem mechanischen Verschleiss unterliegen. Leider ist auch bei komplexeren optischen Systemen, wie sie bei Aufzügen zur Anwendung kommen, die Aussagekraft auf einige wenige Zustände beschränkt und der Erfassungsbereich eher eingeschränkt. Es kann zum Beispiel detektiert werden, ob sich jemand im Türbereich aufhält, und es können Bewegungen erkannt werden. Grössere Raumbereiche lassen sich so jedoch nicht zuverlässig überwachen. Auch beträgt die Reaktionszeit von Lichtschranken oder Lichtgittern ca. 65 Millisekunden, was unter Umständen zu lang sein kann.

Gewisse optische Fotosensoren ermöglichen sogar das Erfassen 3-dimensionaler Bilder, wobei mechanisch bewegte Teile - zum Beispiel in Form von Spiegeln - zum Einsatz kommen. Diese Sensoren sind aufwendig und teuer.

Aus der PCT-Patentanmeldung WO 01/42120 ist ein System zur Überwachung von Aufzugtüren bekannt, das mit einem vorprogrammierten Prozessor, einer digitalen Kamera, einer analogen Kamera oder einer Videokamera arbeitet. Die Kamera liefert eine Sequenz von 2-dimensionalen Bildern durch deren Vergleich Information über den Zustand von Aufzugtüren verfügbar gemacht wird. Dieses System arbeitet mit Fremdlicht, das von der Kamera eingefangen und aufgenommen wird. Das führt zu Problem in Situationen, wo die Intensität dieses Fremdlichts sich stark verändert - zum Beispiel bei Einfall von Sonnenlicht - und damit die Bildhelligkeit stark zunimmt.
Umgekehrt kann der Einsatz einer solchen Kamera zu besagtem Zweck auch problematisch sein, wenn das vorhandene Fremdlicht nicht ausreicht. Bei der Bereichsüberwachung ist es essentiell, dass die Überwachung unter allen Umständen sicher und zuverlässig funktioniert. Eine Abhängigkeit von Fremdlicht ist aus dieser Sicht problematisch. Gemäss der PCT-Patentanmeldung kommt ein klassischer Mustererkennungsansatz (Patternmatching) zur Anwendung, um die Sequenz der 2-dimensionalen Bilder auswerten zu können. Ein System, das gemäss der genannten PCT-Patentanmeldung mit 2-dimensionalen Bildern arbeitet, kann keine Aussage über Distanzen treffen. Eine gewisse Aussage über Bewegungen und Bewegungsrichtungen ist bei einem solchen 2-dimensional arbeitenden System nur durch eine rechenintensive Nachbearbeitung der gelieferten Bilder möglich.

Ein weiteres Überwachungssystem ist in dem US-Patent 5,387,768 beschrieben. Das dort beschriebene System setzt eine Kamera ein, deren Bilder in einer aufwendigen Art und Weise aufbereitet werden, um eine Aussage darüber treffen zu können, ob und wie viele Personen sich im Bereich eines Aufzugs aufhalten. Die Kamera macht Aufnahmesequenzen mit verschiedenen Zoomeinstellungen, um daraus eine Aussage über etwaige Bewegungen treffen zu können.

In dem US-Patent 5,345,049 ist ein Aufzug beschrieben, bei dem mittels Infrarotsensor(en) erfasst wird, ob eine oder mehrere Personen im Zugangsbereich eines Aufzugs warten. Es erfolgt hier keine Bestimmung der Personenzahl.

Es sind 3-D Halbleitersensoren bekannt, die das 3-dimensionale Erfassen von Bildinformation ermöglichen. Derartige Sensoren sind zum Beispiel aus dem Artikel "Fast Range Imaging by CMOS Sensor Array Through Multiple Double Short Time Integration (MDSI)", P. Mengel et al., Siemens AG, Corporate Technology Department, Munich, Germany, bekannt. Ein solcher 3-D Halbleitersensor kann zur Raumüberwachung eingesetzt werden. Es handelt sich hierbei um den nächstliegenden Stand der Technik.

Ein weiteres Beispiel ist in dem Artikel "A CMOS Photosensor Array for 3D Imaging Using Pulsed Laser", R. Jeremias et al., 2001 IEEE International Solid-State Circuits Conference, Seite 252, beschrieben.

Es gibt Aufzugsysteme mit Zutrittskontrolle. Solche Systeme arbeiten zum Beispiel mittels Badges und Badge-Lesegeräten. So kann geprüft werden, ob eine Person berechtigt ist den Aufzug zu benutzen. Nur eine Person, die sich per Badge zu erkennen gibt kann eine Aufzugkabine rufen und ein Zielstockwerk anwählen. So weit funktionieren derartige Systeme zuverlässig. Wer und wie viele Personen jedoch die Aufzugkabine betreten, ist mit den heutigen Ansätzen kaum nachprüfbar. Mit entsprechenden baulichen Massnahmen, zum Beispiel einem Drehkreuz, einer Zutrittschleuse, oder anderen architektonischen Massnahmen kann man den Zutritt zusätzlich kontrollieren. Diese Ansätze sind jedoch aufwendig und aus ästhetischen Gründen oft nicht geeignet.

Bei den heutigen Identifikationssystemen zur Liftbenutzung kann somit nicht gewährleistet werden, dass wirklich nur die berechtigten Personen eine Aufzugkabine betreten oder diese in einem Stockwerk verlassen, für das sie zutrittsberechtigt sind.

Es ist eine Aufgabe der Erfindung, verbesserte Aufzüge bereit zu stellen.

Es ist eine Aufgabe der Erfindung, eine genaue und zuverlässige Bereichsüberwachung bei Aufzügen zu ermöglichen.

Es ist eine weitere Aufgabe der Erfindung eine zuverlässige und schnell arbeitende Problemerkennung für Aufzüge zu realisieren.

Diese Aufgabe wird in vorteilhafter Weise erfindungsgemäss durch eine Vorrichtung nach Patentanspruch **1**, ein Verfahren nach Anspruch **12** und ein Softwaremodul nach Anspruch **16** gelöst.

Vorteilhafte Weiterbildungen der Erfindung sind durch die abhängigen Ansprüche **2 - 11** und **13- 15** definiert. Die Erfindung wird nachfolgend beispielsweise an Hand von Zeichnungen näher erläutert. Es zeigen:
- Fig. 1A, 1B: schematische Seitenansichten der Kabine eines Aufzugs mit einem erfindungsgemässen Sensor;
- Fig. 2: schematisches Blockdiagramm eines erfindungsgemässen Sensors mit Verarbeitungseinrichtung,
- Fig. 3: schematische Seitenansicht der Kabine eines Aufzugs mit einem erfindungsgemässen Sensor;
- Fig. 4: schematisches Flussdiagramm, gemäss Erfindung;
- Fig. 5A, 5B: schematische Draufsichten einer Aufzugkabine samt Zugangsbereich mit einem erfindungsgemässen Sensor und einer erfindungsgemässen Vorrichtung;
- Fig. 6: schematisches Blockdiagramm eines erfindungsgemässen Softwaremoduls.

Gemäss Erfindung wird erstmals ein neuartiger optischer 3-D Sensor im Aufzugbereich eingesetzt. Dabei handelt es sich vorzugsweise um einen 3-D Sensor, der im Infrarotbereich arbeitet. Besonders geeignet ist ein 3-D Sensor, der einen optischen Sender zum impulsartigen Aussenden von Licht und eine CMOS Sensorgruppe zum Empfangen von Licht umfasst. Idealerweise handelt es sich bei dem optischen Sender um eine Leuchtdiode oder Laserdiode, die zum Beispiel Licht im infraroten Bereich aussendet, wobei das Licht in kurzen Impulsen - quasi blitzartig - emittiert wird. Die Impulse können mehrere 10 Nanosekunden lang sein. Vorzugsweise ist die Diode zu diesem Zweck mit einem (elektrischen) Shutter versehen, der das emittierte Licht unterbricht. Die Diode kann aber auch direkt gepulst werden. Die Sensorgruppe dient als Bildsensor, der Licht in elektrische Signale umwandelt. Vorzugsweise besteht die Sensorgruppe aus einer Anzahl von lichtempfindlichen Elementen. Die Sensorgruppe ist mit einem Verarbeitungschip (z.B. ein CMOS Sensorchip) verbunden, der die Laufzeit des emittierten Lichtes bestimmt, indem ein spezielles Integrationsverfahren (multiple double short time integration, MDSI genannt) ausgeführt wird. Dabei misst der Verarbeitungschip in wenigen Millisekunden simultan die Distanz zu einer ganzen Anzahl von Zielpunkten im Raum. Typischerweise kann dabei eine räumliche Auflösung von 5mm erzielt werden.

Ein weiterer 3D-Sensor, der neben anderen 3D-Sensoren auch für den Einsatz im Zusammenhang mit der vorliegenden Erfindung geeignet ist, basiert auf einem Distanzmessprinzip, bei dem die Laufzeit von ausgesendetem Licht über die Phase des Lichts erfasst wird. Dabei wird die Phasenlage beim Senden des Lichtes und beim Empfangen verglichen und daraus die verstrichene Zeit bzw. der Abstand zum reflektierenden Objekt ermittelt. Dazu wird vorzugsweise statt kurzen Lichtimpulsen ein moduliertes Lichtsignal emittiert.

Um Fremdlichteinflüsse zu unterdrücken, kann man eine Doppelabtastung vornehmen, bei der einmal mit und einmal ohne Licht abgetastet wird. Man erhält dabei zwei elektrische Signale (einmal mit aktiver Beleuchtung einmal ohne), die man durch Subtraktion in ein endgültiges Signal überführen kann, das im Wesentlichen vom Fremdlicht unabhängig ist. Ein solcher Sensor kann sogar bei Sonneneinstrahlung und bei sich ändernden Lichteinflüssen zuverlässig eingesetzt werden.

Vorzugsweise wird der 3-D Sensor aus Halbleiterkomponenten realisiert, was zu einer grossen Zuverlässigkeit und Robustheit führt. Auch ist ein solcher 3-D Sensor besonders klein und kann durch Massenproduktion günstig herstellbar gemacht werden.

Durch die Erfassung von drei Dimensionen kann eine Vorrichtung realisiert werden, die direkt die Positionen von Personen oder anderen Objekten, die Distanzen zwischen diesen und sogar deren Bewegungen und Bewegungsrichtungen erfasst. Zu diesem Zweck kann eine Verarbeitungseinrichtung eingesetzt werden (zum Beispiel ein PC oder eine CPU mit peripheren Komponenten), die räumliche mathematische Operationen ausführt. Diese Art von räumlichen mathematischen Operationen unterscheidet sich wesentlich von den bisher verwendeten speziellen Mustererkennungsansätzen, die zum Beispiel mit verschiedenen Graustufen arbeiten.

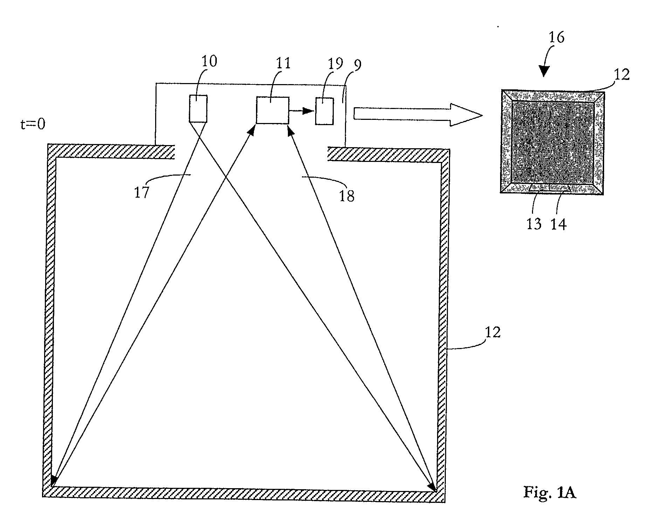

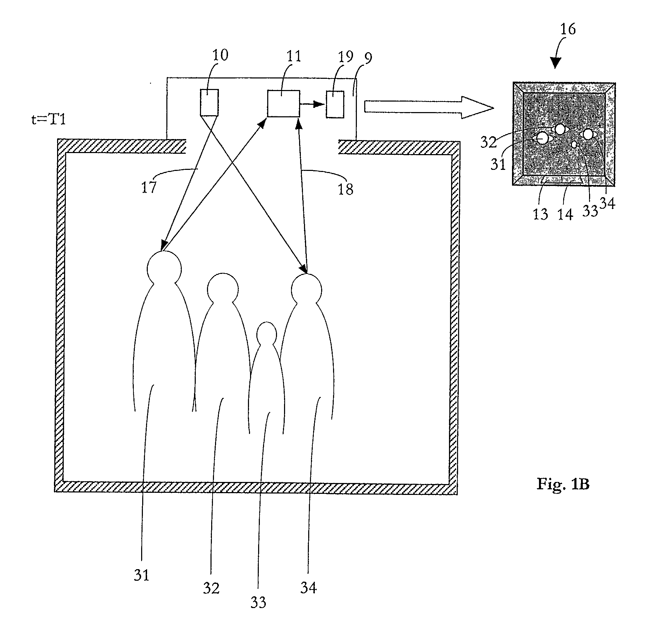

Eine erste Ausführungsform einer erfindungsgemässen Vorrichtung ist in den Figuren 1A und 1B als schematischer Schnitt gezeigt. Es handelt sich um eine Vorrichtung zur Bereichsüberwachung, wobei im vorliegenden Bespiel der Innenbereich einer Aufzugkabine 12 überwacht wird. Die Vorrichtung umfasst einen 3-D Halbleitersensor 9, der derart im Bereich oberhalb der zu überwachenden Aufzugkabine 12 montiert ist, dass sich der Innenraum der Kabine 12 zumindest teilweise im Erfassungsbereich 17, 18 des Sensors 9 befindet. Zur besseren Darstellung des Sensors ist dieser wesentlich grösser dargestellt, als er in Wirklichkeit ist. Der Sensor 9 umfasst eine Laserdiode 10, die als Lichtquelle dient und einen Eigenlichtanteil aussendet. Je nach optischer Strahlformung ergibt sich ein beleuchteter Bereich, zum Beispiel in Form eines Lichtkegels 17. Es ist eine Sensorgruppe 11 vorgesehen, die als Bildsensor dient und über den Lichtkegel 18 Lichtinformation empfängt und in elektrische Signale umwandelt. Die Lichtinformation wird durch einen Verarbeitungschip 19 aufbereitet und in Bildinformation 16 (z.B. in Form eines 3-D Abstandsbildes) umgesetzt. Ein Beispiel eines solchen 3-D Abstandsbildes 16 ist in Figur 1A stark vereinfacht dargestellt. Man kann dem Abstandsbild 16 entnehmen, dass die Kabine 12 leer steht. Die Kabinentüren 13 und 14 sind geschlossen. In Figur 1A ist schematisch angedeutet, dass das Abstandsbild 16 ein 3-dimensionales Abbild der Aufzugkabine 12 ist.

Wiederholt man den Erfassungsvorgang zu einem späteren Zeitpunkt T1, so ergibt sich das in Figur 1B gezeigte Abstandsbild 16. Das Abstandsbild 16 zeigt, dass sich insgesamt vier Personen 31, 32, 33 und 34 in der Kabine 12 aufhalten. Das Abstandsbild 16 ist ein 3-dimensionales Abbild der Aufzugkabine 12 und der Personen 31 - 34.

Die in Richtung Kabine 12 ausgesendeten Laserpulse werden vorzugsweise mit Bezug auf den Anfang eines Integrationsfensters synchronisiert. Der von der Sensorgruppe 11 nach Reflektion innerhalb der Kabine 12 empfangene Laserpuls löst nach einer Laufzeit T0 ein linear ansteigendes Sensorsignal X(t) aus, das zum Beispiel zu den Integrationszeitpunkten T2 und T3 gemessen werden kann. In Abhängigkeit der Distanz von der Lichtquelle 10 zu den verschiedenen Raumpunkten und von dort zu der Sensorgruppe 11 wird nur ein Bruchteil der ursprünglichen Intensität der Lichtpulse detektiert während das Integrationszeitfenster T2 bis T3 aktiv ist. Indem man zum Beispiel zwei Integrationsmessungen zu unterschiedlichen Zeiten T2 und T3 macht (mit T0 < T2 < T3), kann die Position und Steigung des integrierten Intensitätssignals X(t) ermittelt werden. Somit kann die Laufzeit T0 genau bestimmt werden und damit auch die Distanz zu Personen oder Objekten. Eine derartige Auswertung der Lichtinformation durch den Verarbeitungschip 19 erlaubt es, Information zu erhalten, die auf andere Art und Weise momentan nicht erhältlich ist.

Ein Teil dieser Verarbeitung findet im Verarbeitungschip 19 statt und nicht erst in einer separaten Verarbeitungseinrichtung. Dass heisst, ein Teil der Verarbeitung wird durch entsprechende Hardware ausgeführt, was zuverlässig und schnell ist.

Es sind zwei unterschiedliche Verarbeitungsansätze anwendbar. Bei dem ersten erfindungsgemässen Ansatz umfasst die Sensorgruppe n lichtempfindliche Elemente (n > 0). Jedes dieser lichtempfindlichen Elemente liefert ein Intensitätssignal xₙ(t), dessen Stärke abhängig ist von der Intensität des vom jeweiligen lichtempfindlichen Element empfangenen Lichts. Diese Intensitätssignale xₙ(t) können - zum Beispiel durch eine Art Überlagerung - zu einem Intensitätssignal X(t) zusammengefasst werden. Nach diesem Zusammenfassen kann dann die oben beschriebene Auswertung erfolgen, bei der aus der Position und Steigung des Intensitätssignals X(t) der Zeitpunkt T0 ermittelt wird. Bei dieser Ausführungsform wird die Flächenauflösung der Anordnung reduziert, da mehrere lichtempfindliche Elemente gemeinsam ausgewertet werden. Es ist trotzdem möglich, die Laufzeit und damit die Distanz zu reflektierenden Objekten zu ermitteln, die sich im überwachten Bereich befinden. Man erhält also eine drei-dimensional arbeitende Sensorvorrichtung, deren Tiefenauflösung besser ist als die Flächenauflösung.

Bei dem zweiten erfindungsgemässen Ansatz umfasst die Sensorgruppe wiederum *n* lichtempfindliche Elemente (*n* > 0). Jedes dieser lichtempfindlichen Elemente liefert ein Intensitätssignal xₙ(t), dessen Stärke abhängig ist von der Intensität des vom jeweiligen lichtempfindlichen Element empfangenen Lichts. Diese Intensitätssignale xₙ(t) können dann die oben beschriebene Auswertung durchlaufen, wobei jedes der Intensitätssignale xₙ(t) einzeln (vorzugsweise zeitgleich) verarbeitet wird. Aus der Position und Steigung jedes der Intensitätssignale xₙ(t) ist der jeweilige Zeitpunkt Tₙ0 ermittelbar. Vorzugsweise weist der Verarbeitungschip mehrere parallele Kanäle (vorzugsweise *n* Kanäle) zur Verarbeitung der *n* Intensitätssignale xₙ(t) auf. Bei dieser Ausführungsform ergibt sich eine Flächenauflösung, da mehrere Punkte im Raum (zum Beispiel mehrere Punkte eines sich im überwachten Raum befindenden Objekts) unabhängig voneinander erfasst werden können. Für jeden dieser Punkte im Raum ist es möglich, die Laufzeit Tₙ0 und damit die Distanz zu ermitteln. Man erhält also eine drei-dimensional arbeitende Sensorvorrichtung, mit Tiefenauflösung und Flächenauflösung.

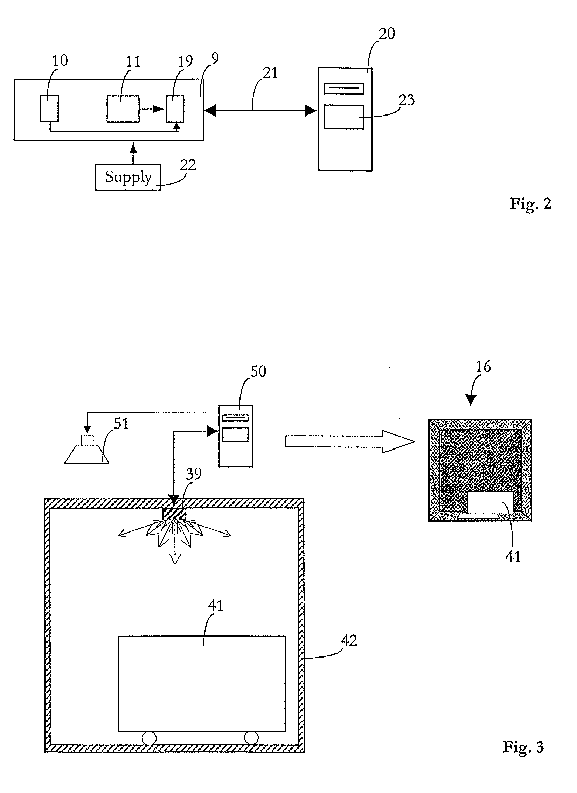

Wie in Figur 2 gezeigt, weist die erfindungsgemässe Vorrichtung zusätzlich eine Verarbeitungseinrichtung 20 auf, die zum Beispiel über eine Kommunikationsverbindung 21 mit dem Sensor 9 in Verbindung steht. Die Kommunikationsverbindung 21 dient zur Übertragung von elektrischen Signalen, welche Bildinformation repräsentieren (auch Zustandsinformation genannt), von dem Sensor 9 an die Verarbeitungseinrichtung 20. Zusätzlich weist die Vorrichtung ein Versorgungsmittel 22 (zum Beispiel eine Spannungsquelle) zum Versorgen des Sensors 9 auf. Die Verarbeitungseinrichtung 20 ist durch Installation eines Softwaremoduls derart ausgelegt, dass die Bildinformation auswertbar ist, um die Bereichsüberwachung zu ermöglichen.

In einer möglichen Ausführungsform wird die Bildinformation von der Verarbeitungseinrichtung 20 weiter ausgewertet, um Information über den Zustand des überwachten Bereiches zu erhalten. Hierzu kann zum Beispiel die aus der Bildinformation gewonnene Zustandsinformation mit Soll-Information verglichen werden. Zu diesem Zweck kann die Verarbeitungseinrichtung 20 Mittel 23 zum Bereitstellen der Soll-Information umfassen. Dabei kann es sich zum Beispiel um einen internen Festplattenspeicher handeln. Es ist zum Beispiel möglich, dass das in Figur 1A gezeigte Abstandsbild 16 als Soll-Information in dem Festplattenspeicher gespeichert ist. Mit einem Vergleichsalgorithmus kann die Verarbeitungseinrichtung 20 ermitteln, ob die gerade gewonnene Zustandsinformation mit der Soll-Information übereinstimmt. Ist dies der Fall, so kann davon ausgegangen werden, dass der Kabineninnenraum leer ist.

Es kann auch andere Soll-Information vorgegeben sein, mit der die Verarbeitungseinrichtung 20 jeweils Vergleiche durchführt. Jeder Soll-Information kann zum Beispiel eine bestimmte Reaktion zugeordnet sein.

Bei einer anderen Ausführungsform wird die Bildinformation von einem Verarbeitungschip 19 hardwareseitig vorverarbeitet und dann von der Verarbeitungseinrichtung 20 ausgewertet, ohne die Zustandsinformation mit Soll-Information zu vergleichen. Hierbei wird Bildinformation miteinander verglichen, die von dem Sensor 9 zu mindestens zwei zeitlich kurz aufeinanderfolgenden Zeitpunkten erfasst wurde. Ein solcher Vergleich kann zum Beispiel durch geeignete rechnerische Überlagerung der Bildinformation erfolgen. Subtrahiert man die Bildinformation zum Zeitpunkt t=0 von der Bildinformation zum Zeitpunkt t=a1, so kann die Verarbeitungseinrichtung 20 Veränderungen im 3-dimensionalen Raum erkennen.

Eine weitere Ausführungsform der Erfindung ist in Figur 3 gezeigt. In Figur 3 ist nun der Sensor 39 in realistischer Grösse dargestellt. Er ist im oberen Bereich der Aufzugkabine 42 angeordnet und deckt von oben her den zu überwachenden Innenraum der Kabine 42 ab, wie durch die kleinen Pfeile im Umfeld des Sensors 39 angedeutet. Es befindet sich ein Objekt 41 in der Aufzugkabine 42, das relativ nahe an den offenen Kabinentüren steht. Die Vorrichtung ist in der Lage, zu erkennen, ob die Kabinentüren offen sind, da sich bei geöffneten Türen ein starker Helligkeitsunterschied ergibt. Der Sensor 39 ist mit einer Verarbeitungseinrichtung 50 verbunden, die ein geeignetes Softwaremodul umfasst. Die gesamte Vorrichtung ist so ausgelegt, dass in einem ersten Schritt erfasst werden kann, ob sich eine Person und/oder ein Objekt im Inneren der Kabine 42 befindet. Ist dies der Fall, so wird in einem nächsten Schritt eine Art Kategorisierung durchgeführt. Diese Kategorisierung ermöglicht es der Vorrichtung, situationsangepasste Reaktionen auszulösen. Im gezeigten Beispiel ist die Vorrichtung in der Lage, zu erkennen, ob sich Personen und/oder Objekte im Aufzug befinden. Aufgrund der klaren rechteckigen Geometrie kann die Vorrichtung erkennen, dass es sich um ein Objekt 41 handeln muss. Als nächstes kann die Vorrichtung zum Beispiel die Position des Objektes 41 innerhalb der Kabine 42 zu erkennen versuchen, um daraus Reaktionen ableiten zu können. Im gezeigten Beispiel befindet sich das Objekt 41 sehr nahe an den geöffneten Türen. Eine mögliche Reaktion wäre es über einen Lautsprecher 51 eine akustische Warnung abzusetzen, um die Person, die den Aufzug beladen hat aufzufordern das Objekt 41 weiter in den Innenraum der Kabine 42 zu bewegen. Solange dies nicht geschehen ist, wird das Schliessen der Türen von der Vorrichtung unterbunden.

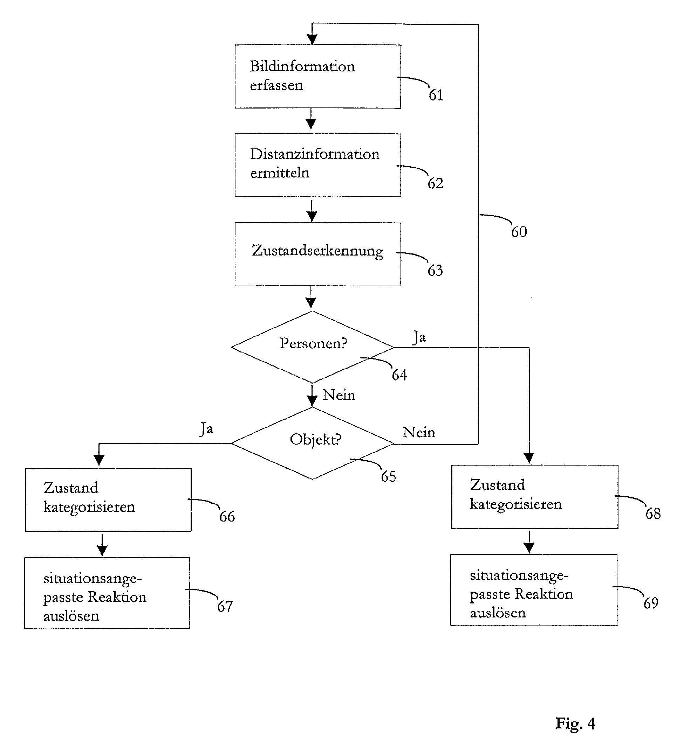

Ein erfindungsgemässes Verfahren zur Bereichsüberwachung umfasst mehrere Verfahrensschritte, wie anhand eines Beispiels in Figur 4 gezeigt. Es wird durch einen Sensor (zum Beispiel Sensor 9 in Figur 1A) Licht erfasst (Box 61 in Figur 4), das an verschiedenen Raumpunkten im zu überwachenden Bereich reflektiert wurde. Dieses Licht stammt von einer Lichtquelle (zum Beispiel Lichtquelle 10 in Figur 1A). Aus dem erfassten Licht wird Distanzinformation ermittelt (Box 62 in Figur 4). Dabei wird die Laufzeit des Lichtes berücksichtigt. Um dies zu ermöglichen, findet eine Synchronisation zwischen der Lichtquelle und der Sensorgruppe statt. Dieser Schritt wird vorzugsweise in einem speziellen Verarbeitungschip (zum Beispiel Verarbeitungschip 19 in Figur 1A) ausgeführt. Dann erfolgt die Auswertung der Distanzinformation (Box 63) zum Erkennen eines Zustandes im überwachten Bereich. In einem Verarbeitungsschritt (Box 64) wird durch die Verarbeitungseinrichtung ermittelt, ob sich Personen im überwachten Bereich aufhalten. Ist dies nicht der Fall, so wird ermittelt, ob sich Objekte im überwachten Bereich befinden (Box 65). Falls Personen im überwachten Bereich erkannt wurden, so verzweigt das Flussdiagramm. Es kann in einem weiteren Schritt 68 eine Kategorisierung erfolgen. Im Folgenden sind einige Kategorisierungsbeispiele aufgeführt:
- Anzahl der Personen ermitteln,
- Position der Person(en) innerhalb des überwachten Bereiches erkennen,
- Bewegungen bzw. Bewegungsrichtungen erfassen,
- Berechtigung prüfen,
- Prüfen, ob mehr Personen im überwachten Bereich sind als vorgegeben, usw.

Je nach Kategorisierung können in einem Schritt 69 eine oder mehrere der folgenden beispielhaften Reaktionen ausgelöst werden:
- warten bis weitere Personen eingestiegen sind, bevor Aufzugkabine in Bewegung versetzt wird,
- bei Überbesetzung die Aufzugkabine nicht in Bewegung versetzen und/oder eine Durchsage absetzen,
- falls sich eine oder mehrere Personen zu nahe am Türbereich aufhalten, entweder abwarten, bis sich Situation verändert hat, oder eine Durchsage absetzen,
- falls sich eine Person in Richtung Türen bewegt, den Türöffnungs- bzw. Schliessvorgang entsprechend anpassen (z.B. das Schliessen der Türen stoppen oder verlangsamen),
- falls sich unberechtigte Aufzugbenutzer in der Kabine aufzuhalten scheinen, entweder eine Durchsage absetzen, oder einen Alarmruf auslösen.

Falls die Vorrichtung ermittelt hat, dass sich ein Objekt in der Kabine befindet, so kann in einem weiteren Schritt 66 eine Kategorisierung erfolgen. Im Folgenden sind einige Kategorisierungsbeispiele aufgeführt:
- Anzahl der Objekte ermitteln,
- Art der Objekte ermitteln,
- Grösse der Objekte ermitteln,
- Position des/der Objekt/e innerhalb des überwachten Bereiches erkennen,
- Bewegungen bzw. Bewegungsrichtungen von Objekten erfassen,

Je nach Kategorisierung können in einem Schritt 67 eine oder mehrere der folgenden beispielhaften Reaktionen ausgelöst werden:
- bei Überbesetzung die Aufzugkabine nicht in Bewegung versetzen und/oder eine Durchsage absetzen,
- falls sich eines oder mehrere Objekte zu nahe am Türbereich befinden, entweder abwarten, bis sich Situation verändert hat, oder eine Durchsage absetzen,
- falls ein Objekt in Richtung Türen bewegt wird, den Türöffnungs- bzw. Schliessvorgang entsprechend anpassen (z.B. das Schliessen der Türen stoppen oder verlangsamen).

Falls weder eine Person noch ein Objekt erfasst wurde, verzweigt das Flussdiagramm über den Zweig 60 zurück zum Anfang und der gesamt Vorgang wird erneut wiederholt. Nach diesem Schema können beliebig verzweigte Entscheidungsbäume realisiert werden, um letztendlich automatisch eine Reaktion auslösen zu können, die der vorherrschenden Situation entspricht bzw. an diese angepasst ist.

Vorzugsweise werden die beschriebenen Verfahrensschritte in einer Verarbeitungseinrichtung ausgeführt, wobei ein entsprechendes Softwaremodul zu Einsatz kommt. Vorzugsweise kommen räumliche mathematische Operationen bei der Auswertung der Distanzinformation zur Anwendung.

Die Verarbeitungseinrichtung kann zusätzlich zur Bereichsüberwachung so erweitert werden, dass die folgenden Türzustände erkennbar sind:
- Türspalt,
- Position der Aufzugtüre,
- Schliessverhalten der Aufzugtüre,
- Objekt im Bereich der Aufzugtüre.

In Abhängigkeit von dem erkannten Türzustand wird dann durch die Verarbeitungseinrichtung eine situationsangepasste Reaktion ausgelöst. Es kann sich dabei um eine oder mehrere der folgenden Reaktionen handeln:
- Türschliessvorgang stoppen,
- Türöffnungsvorgang stoppen,
- Türschliessvorgang verlangsamen,
- Türöffnungsvorgang verlangsamen,
- Lautsprecherdurchsage auslösen,
- Serviceruf absetzen,
- Notruf auslösen,
- Aufzugbetrieb stoppen,
- Aufzugbetrieb mit reduzierter Geschwindigkeit fortsetzen,
- Evakuierung der Aufzugkabine einleiten,
- usw.

Je nach Ausführungsform kann eine erfindungsgemässe Vorrichtung eine oder mehrere der folgenden Zustände erkennen:
- Fahrgastzahl in der Aufzugkabine oder im Zugangsbereich (Vorraum) vor einem Aufzugschacht
- Zahl der Personen, die den Aufzug betreten oder verlassen,
- direktionale Personenflüsse,
- Überlast,
- falsche Beladung,
- Behinderungen im Türbereich,
- Bedarfserfassung,
- Bewegungen,
- Türspalt
- Position der Aufzugtüre
- Schliessverhalten der Aufzugtüre
- Objekt im Bereich der Aufzugtüre.

Je nach Ausführungsform kann eine erfindungsgemässe Vorrichtung eine oder mehrere der folgenden Reaktionen auslösen:
- kein Schliessen der Aufzugtüren, solange sich Personen im Zugangsbereich des Stockwerkes befinden, in dem sich die Aufzugkabine gerade befindet,
- situationsabhängiges Steuern der Aufzugkabine, um dem Personenaufkommen in einzelnen Stockwerken Rechnung tragen zu können,
- Aufzugkabine stoppt nur auf einer Etage, wenn Personen im Zugangsbereich der entsprechenden Etage warten,
- automatischer Ruf eine Aufzugkabine, falls sich eine Person einer Schachttüre nähert und dort ausharrt,
- verkehrsabhängiges bzw. bedarfsabhängiges Steuern, zum Beispiel bei Liftanlagen mit mehreren Aufzugkabinen,
- Einleiten von Notmassnahmen, falls Problem erkannt oder eine Personengefährdung möglich ist,
- Information anzeigen und/oder Durchsage auslösen,
- Zutritt zu einer Etage erlauben oder verwehren,
- Benutzung der Aufzugkabine erlauben oder verwehren,
- statistische Auswertungen zum Beispiel der Personenzahl, Benutzungsfrequenz, etc.,
- Pay-lift Funktionen

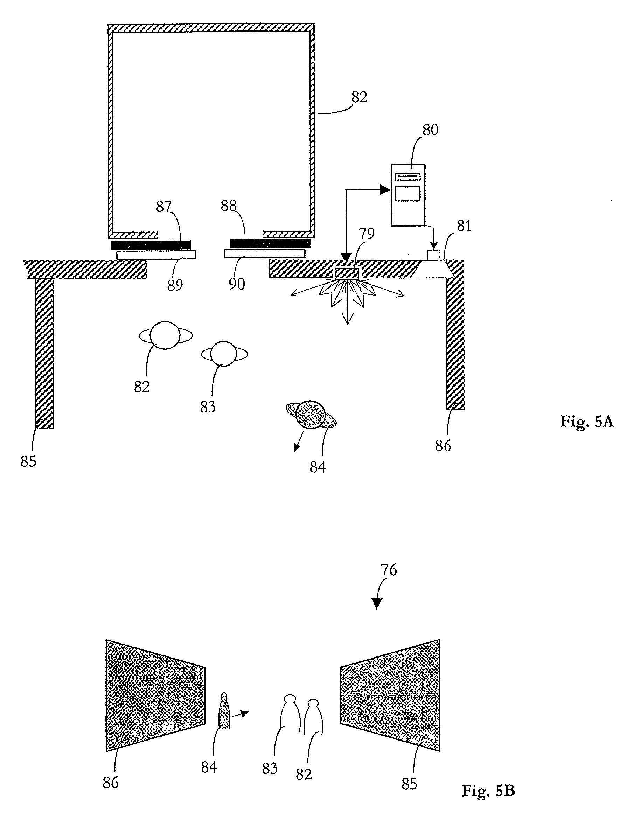

Eine weitere Ausführungsform der Erfindung ist in den Figuren 5A und 5B gezeigt. Es handelt sich um eine Vorrichtung zum Überwachen des Zugangsbereiches vor einem Aufzugschacht. In der schematischen Draufsicht in Figur 5A ist eine Aufzugkabine 82 gezeigt, die sich auf einem Stockwerk eines Gebäudes befindet. Die Kabine 82 ist durch Kabinentüren 87, 88 und Schachttüren 89, 90 von dem Zugangsbereich abtrennbar. Die Türen 87 - 90 sind im gezeigten Bild leicht geöffnet. Neben dem Aufzug befindet sich in einer Wand ein erfindungsgemässer Sensor 79, der mit einer Verarbeitungseinrichtung 80 in Verbindung steht. Es ist ein Lautsprecher 81 vorgesehen, über den Durchsagen gemacht werden können. Der Zugangsbereich ist seitlich durch Wände 85 und 86 begrenzt. Es ist eine Situation dargestellt, wo sich insgesamt drei Personen 82, 83, 84 im Zugangsbereich aufhalten. Die Personen 82 und 83 stehen unmittelbar vor den Türen 87 - 90 und warten, bis sich diese Türen geöffnet haben. Eine weitere Person 84 bewegt sich von den Türen 87 - 90 weg, wie durch einen Pfeil angedeutet. Die erfindungsgemässe Vorrichtung ist in der Lage, diesen Zustand zu erfassen. Die Vorrichtung erzeugt ein 3-dimensionales Abstandsbild 76, das schematisch in Figur 5B gezeigt ist. Die Vorrichtung erkennt, dass sich drei Personen im Zugangsbereich aufhalten. Des Weiteren ist sie in der Lage, zu überwachen, ob die Personen 82 und 83 sich nicht zu nahe den sich öffnenden Türen 87 - 90 nähern. Sollte dies der Fall sein, so könnte die Öffnungsbewegung der Türen gestoppt werden, um eine Gefährdung der Personen zu vermeiden. Sobald die Türen vollständig geöffnet sind, werden die Personen 82, 83 die Aufzugkabine 82 betreten. Auch dieser Vorgang kann überwacht werden. Die Türen 87 - 90 können sich automatisch schliessen, sobald die beiden Personen 82, 83 die Aufzugkabine 82 weit genug betreten haben. Die Person 84 wird von der Vorrichtung weiter erfasst. Da sich diese Person 84 aber von den Türen weg bewegt, wird die Aufzugkabine nicht auf diese Person 84 warten.

Die beschriebenen Ausführungsformen können erweitert werden, indem die Verarbeitungseinrichtung 20, 50, 80 softwareseitig so auslegt wird, dass nicht nur erkannt werden kann, ob und wo sich Personen und/oder Objekte befinden, sondern dass durch Vergleichsoperationen auch die Objekte bzw. Personen klassifiziert bzw. kategorisiert werden können.

Die gezeigten Ausführungsformen können erweitert werden, indem der Verarbeitungseinrichtung 20, 50, 80 eine Sequenz mehrerer zeitlich aufeinanderfolgender Bilder zugeführt wird. In diesem Fall kann die Verarbeitungseinrichtung 20, 50, 80 durch geeignete Verarbeitung der Bildinformation zusätzlich zur reinen Detektierung der Personen und/oder Objekte auch die Bewegungsrichtung und/oder Geschwindigkeit der Personen und/oder Objekte ermitteln. Diese Bewegungsinformation kann verwendet werden, um situationsangepasste Reaktionen auszulösen. Ermittelt die Verarbeitungseinrichtung 20, 50, 80 zum Beispiel, dass sich eine Person langsam bewegt, während die Türen eines Aufzugs schliessen, so kann das Schliessen der Türen unterbrochen oder die Schliessbewegung gestoppt werden. Handelt es sich um eine Person, die sich schnell bewegt, kann es zum Beispiel ausreichen, die Schliessbewegung der Türen zu verlangsamen oder die Schliessbewegung nur für einen kurzen Moment zu unterbrechen. Als weitere Reaktion ist es denkbar, eine Durchsage auszulösen, um sicher zu stellen, dass sich niemand im Türbereich aufhält.

Wie in den Figuren 1A und 1B und 3 gezeigt, kann die erfindungsgemässe Vorrichtung zum gleichzeitigen Überwachen des Kabineninnenraumes und der Kabinentüren und Schachttüren eingesetzt werden.

Will man in erster Line den Innenraum eine Aufzugkabine überwachen, so kann der Sensor im Bereich der Kabinendecke montiert werden, wie schematisch in den Figuren 1A, 1B und 3 zu erkennen.

Ordnet man den Sensor im Bereich der Rückwand einer Kabine an, dass heisst im Bereich der Wand, die den Kabinentüren gegenüber liegt, so kann man bei geöffneten Türen nicht nur den Zustand im Innenraum der Kabine erfassen, sondern durch die geöffneten Türen hindurch auch einen Bereich im Vorraum vor der Kabine.

Bei den in den Figuren 1A, 1B und 3 gezeigten Konfigurationen bewegt sich der Sensor solidarisch mit der Aufzugkabine von Etage zu Etage. Die Schachttüren der einzelnen Etagen und der Zugangsbereich der Etagen können bei Abwesenheit der Kabine nicht durch den kabinenseitigen Sensor überwacht werden. Es empfiehlt sich, auf jeder Etage einen erfindungsgemässen Sensor einzusetzen, wie zum Beispiel in Figur 5A gezeigt.

Es gibt selbstverständlich zahlreiche andere Möglichkeiten, den Sensor oder die Sensoren anzuordnen.

Generell ist bei der Montage des Sensors zu beachten, dass der Sensor durch externe Einflüsse (Objekte und/oder Personen, Witterung, mechanische Beschädigung, etc.) möglichst unbeeinflussbar sein sollte.

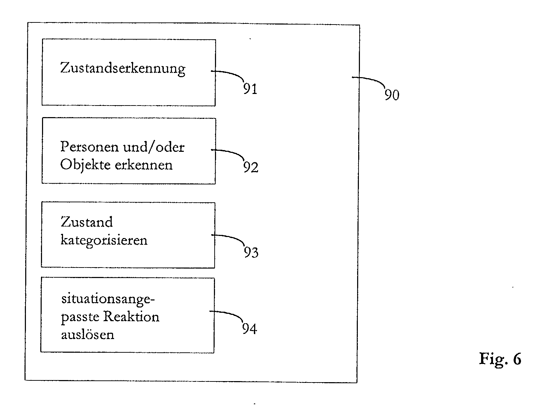

Ein erfindungsgemässes Softwaremodul 90 zum Einsatz in einer Verarbeitungseinrichtung eines Aufzugs ist in Figur 6 gezeigt. Das Softwaremodul 90 führt die folgenden Schritte aus, wenn es von der Verarbeitungseinrichtung aufgerufen und ausgeführt wird:
- Auswerten von Distanzinformation (Submodul 91), die von einem 3-D Sensor im zu überwachenden Bereich bereitgestellt wird, um den Zustand des Bereiches zu erfassen,
- Erkennung, ob sich Personen und/oder Objekte im zu überwachenden Bereich befinden (Submodul 92),
- Kategorisieren (Submodul 93) des Zustandes,
- Auslösen (Submodul 94)einer situationsangepassten Reaktion.

Das Softwaremodul 90 kann weitere Module umfassen.

Vorzugsweise werden die Lichtquelle und die Sensorgruppe in einem Gehäuse angeordnet. Dadurch wird die Montage erleichtert, da die Lichtquelle nicht manuell in Bezug auf die Sensorgruppe ausgerichtet werden muss. Die Ausrichtung der beiden Komponenten kann bereits bei der Herstellung oder Vormontage erfolgen.

In einer weiteren Ausführungsform vergleicht die Verarbeitungseinrichtung die Bildinformation mit einem oder mehreren Referenzbildern, um Information über den Bereichszustand zu erhalten. Hierzu kann zum Beispiel ein Referenzbild von der Bildinformation subtrahiert werden.

Gemäss einer verbesserten Ausführungsform erfolgt die Bereichsüberwachung kontinuierlich durch eine Aufeinanderfolge zahlreicher Lichtpulse und deren Verarbeitung. Damit kann die Sicherheit im Aufzugbereich im Vergleich zu konventionellen, mechanischen Ansätzen erhöht werden.

Die erfindungsgemässe Bereichsüberwachung eignet sich sowohl zum Einsatz innerhalb von Gebäuden, als auch zum Einsatz im Freien, da der verwendete Sensor wenig störanfällig ist. Vor allem aber ist die Unempfindlichkeit gegen Fremdlicht ein wesentlicher Aspekt, wenn es um den Einsatz innerhalb oder ausserhalb von Gebäuden geht.

Die Bereichsüberwachung gemäss Erfindung kann nicht nur Ereignisse erkennen, sondern auch eine Klassifizierung vornehmen. So ist es zum Beispiel möglich, dass die Bereichsüberwachung erkennt, ob jemand im Zugangsbereich auf eine Aufzugkabine wartet. Es ist auch ermittelbar, wie viele Personen warten, oder ob eine zu befördernde Person oder ein zu transportierendes Objekt in der Aufzugkabine überhaupt Platz hat. Es können sogar die Anzahl von Personen oder Objekten und zum Beispiel deren Grösse ermittelt werden.

Eine weitere Ausführungsform zeichnet sich dadurch aus, dass mittels Bereichsüberwachung erkannt werden kann, ob auf einer bestimmten Etage eine Aufzugkabine gebraucht wird. Dies kann dadurch realisiert werden, dass die Bereichsüberwachung den Zugangsbereich auf der entsprechenden Etage beobachtet. Nähert sich eine Person den Schachttüren und wartet dort, so schliesst die Vorrichtung daraus, dass die Person auf eine Aufzugkabine wartet. Diese Ausführungsform kann sogar erweitert werden, indem man den Zugangsbereich in zwei Zonen aufteilt. Hält sich eine Person in der Zone auf, die für Fahrten nach oben vorgesehen ist, so stoppt eine Aufzugkabine, die sich auf dem Weg nach oben befindet. Wird eine Person in der Zone detektiert, die für Fahrten nach unten zugewiesen wurde, so stoppt die nächste Kabine, die sich auf einer Fahrt nach unten befindet. Es lässt sich somit eine Bedarfserkennung und eine bedarfsabhängige Aufzugsteuerung realisieren. Es ist ein Vorteil dieser Ausführungsform, dass man die Aufzuganlage komplett ohne die üblichen Anforderungstasten betreiben kann. Das ganze System arbeitet komplett berührungslos.

Kommt eine konventionelle Kommunikationsverbindung zur Verbindung des Sensors mit der Verarbeitungseinrichtung zum Einsatz, so sollten wegen der Sicherheitsrelevanz der von dem Sensor an die Verarbeitungseinrichtung zu transferierenden Daten (Bildinformation) geeignete Massnahmen getroffen werden, um die Sicherheit beim Übertragen der Daten über die an sich nicht sichere Kommunikationsverbindung zu gewährleisten.

Die Vorrichtung gemäss Erfindung kann über eine Kommunikationsverbindung und/oder über ein Netzwerk mit einer Verarbeitungseinrichtung (z.B. mit einem Rechner) verbunden sein, der die vom Sensor gelieferte Bildinformation weiter verarbeitet, aufbereitet und gegebenenfalls abspeichert. Damit lässt sich ein Überwachungssystem realisieren, dass zum Beispiel eine Aufzuganlage mit mehreren Aufzugschächten zentral überwacht.

Vorzugsweise wird eine erfindungsgemässe Vorrichtung in den Sicherheitskreis eines Aufzugs integriert. Dadurch wird der Sicherheitskreis leistungsfähiger und der Aufzug zuverlässiger. Als Konsequenz lässt sich unter Umständen damit die Verfügbarkeit des Aufzugs verbessern. Bei geeigneter Auslegung der erfindungsgemässen Vorrichtung können Betriebsstörungen reduziert werden.

Eine vorteilhafte Weiterbildung der Erfindung ermöglicht es, die Bereichsüberwachung so zu erweitern, dass ein Einklemmschutz realisierbar ist. Der Einklemmschutz gemäss Erfindung erlaubt es, eine Person frühzeitig zu detektieren und eine geeignete Reaktion auszulösen, um zum Beispiel die Einklemmgefahr im Türbereich zu reduzieren.

Ein weiterer Vorteil einer erfindungsgemässen Lösung mittels 3-D Sensor ist darin zu sehen, dass derartige Sensoren eine relativ kurze Zykluszeit (< 20ms) aufweisen. Damit können sehr schnelle Überwachungslösungen realisiert werden. Kritische Zustände können schneller erfasst und Reaktionen rechtzeitig ausgelöst werden. Die Erfindung ermöglicht, Überwachungssysteme zu realisieren, die eine Reaktionszeit zum Erkennen eines Objektes von einigen wenigen Millisekunden aufweisen. Das schnelle Erkennen ermöglicht es, sehr schnell eine geeignete Reaktion auszulösen.

Die verwendeten 3-D Sensoren ermöglichen eine Auswertung der dritten Dimension, was im Vergleich zu 1-dimensionalen Systemen (z.B. Lichtschranken) oder 2-dimensionalen Systemen (z.B. Lichtgitter oder CCD Kameras) vorteilhaft ist. Durch die Erfassung von drei Dimensionen kann die Bereichsüberwachung in direkter Art und Weise ein realitätsnahes Abbild des Istzustandes bekommen.

Es ist ein Vorteil des verwendeten Halbleitersensors, dass dieser mit einem Eigenlichtanteil arbeitet. Damit ist das System im Wesentlich unabhängig von den Umgebungsbedingungen und funktioniert sogar im Dunkeln. Als ein weiterer Vorteil kann geltend gemacht werden, dass die Erfindung ohne einen Kalibriermechanismus realisiert werden kann, der üblicherweise bei Kamera-basierten Systemen zum Einsatz kommt, um geänderten Umgebungsbedingungen Rechnung zu tragen. Mit einem Kalibriermechanismus wird bei einem Kamera-basierten System zum Beispiel die Lichtempfindlichkeit justiert. Dieser Aufwand entfällt.

Eine weitere Ausführungsform der Erfindung zeichnet sich dadurch aus, dass die Verarbeitungseinrichtung so ausgelegt ist, dass Bildinformation abspeicherbar ist. Damit ist es möglich einen kritischen Vorgang, zum Beispiel das Einklemmen einer Person beim Betreten oder Verlassen der Aufzugkabine, mittels Bildinformation zu dokumentieren. Derartige Bildinformation kann zum Beispiel zur Beweissicherung dienen.

In einer weiteren Ausführungsform der Erfindung wird als Reaktion ein Serviceruf ausgelöst, sobald ein Problem erkannt wird. Zusätzlich kann eventuell im Falle eines kritischen Zustandes ein Notruf abgesetzt werden.

Vorteilhafterweise kann man die Auswertung der Bildinformation, die durch den 3-D Sensor geliefert wird, mit der Aufzugsteuerung verknüpfen, um eine Synchronisierung der Informationsverarbeitung zu ermöglichen. Damit kann ein Regelkreis aufgebaut werden, der je nach Zustand eine entsprechend angepasste Reaktion auslöst.

Es ist ein Vorteil der Erfindung, dass die Wartezeiten verringert werden können, da der Aufzug so gesteuert werden kann, dass er in der Lage ist, sich automatisch an ändernde Bedingungen anzupassen. So kann zum Beispiel vermieden werden, dass eine Kabine auf einer Etage stoppt, obwohl dort niemand (mehr) wartet.

In einer weiteren vorteilhaften Ausführungsform ist die erfindungsgemässe Bereichsüberwachung mit einem Zutrittskontrollsystem kombiniert. Damit kann zum Beispiel automatisch überprüft werden, ob nur berechtigte Personen einen Aufzug verwenden. Dies ist zum Beispiel möglich, wenn alle zutrittsberechtigten Personen mit einem Badge ausgestattet sind. Eine Person, die Zutritt zu dem Aufzug wünscht, muss sich mittels Badge gegenüber einem Badgelesegerät ausweisen. Die Zutrittskontrolle zählt die Zahl der Personen, die per Badge angezeigt haben, dass sie Zutritt zur nächsten Aufzugkabine wünschen. Beim Betreten der Aufzugkabine kann das erfindungsgemässe System ermitteln, wie viele Personen den Aufzug wirklich betreten haben. Stimmt die Zahl der Personen in der Kabine nicht mit der Anzahl der Personen überein, die sich per Badge ausgewiesen haben, so kann eine Reaktion ausgelöst werden. Es ist zum Beispiel möglich, den Aufzug nicht in Bewegung zu versetzen und eine Durchsage zu machen, um die Personen erneut aufzufordern sich per Badge auszuweisen.

In einer ähnlichen Art und Weise kann ein Pay-per-use (paylift) Ansatz realisiert werden. Alle Personen, die den Aufzug zu benutzen wünschen, müssen eine gewisse Gebühr zahlen. Die Anzahl der Personen, die bezahlt haben, kann gezählt werden. Nachdem alle Personen die Kabine betreten haben, wird eine automatische Ermittlung der Personenzahl durchgeführt. Bei Abweichungen können entsprechende Massnahmen getroffen werden. So kann zum Beispiel eine Fahrkartenkontrolle ausgelöst werden.

Ein weiteres Pay-per-use System basiert auf der Verwendung eines Schlüssels oder eines Badges, mit dem eine zu befördernde Person sich anmeldet. Diese Anmeldung wird erfasst und die zu zahlende Gebühr der entsprechenden Person belastet. Befinden sich mehr Personen in der Aufzugkabine als erfasst wurden, so kann eine entsprechende Reaktion ausgelöst werden.

## Patentansprüche

1. Vorrichtung zur Bereichsüberwachung mit einem 3-D Halbleitersensor (9; 39; 79) zum Erfassen von dreidimensionaler Bildinformation, wobei der 3-D Halbleitersensor ausgerüstet ist mit
- einer Lichtquelle (10), die derart montierbar ist, dass sich der zu überwachende Bereich zumindest teilweise im beleuchteten Bereich (17) der Lichtquelle (10) befindet,
- einer Sensorgruppe (11), die derart montierbar ist, dass sie Licht empfängt, das im zu überwachenden Bereich reflektiert wird, wobei das empfangene Licht durch die Sensorgruppe (11) in elektrische Signale umwandelbar ist, und
- einem Verarbeitungschip (19) zum Umwandeln der elektrischen Signale in Bildinformation (16),
**dadurch gekennzeichnet, dass**
- der zu überwachende Bereich ein Bereich innerhalb und/oder ausserhalb einer Aufzugkabine (12; 42; 82) ist,
- die Vorrichtung eine Verarbeitungseinrichtung (19, 20; 50; 80) aufweist, mit welcher der Halbleitersensor (9; 39; 79) verbindbar ist, um dreidimensionale Bildinformation verfügbar zu machen, und welche dazu ausgelegt ist, diese Bildinformation zu verarbeiten, um Zustandsinformation zu gewinnen, die den Zustand des zu überwachenden Bereichs repräsentiert.

2. Vorrichtung nach Anspruch 1, **dadurch gekennzeichnet, dass** dreidimensionale Bilder verglichen werden, wobei eines der zu vergleichenden Bilder ein aus einem Speicher bereitstellbares Bild ist.

3. Vorrichtung nach Anspruch 1, **dadurch gekennzeichnet, dass** dreidimensionale Bilder verglichen werden, wobei die Bilder von der Sensorgruppe (11) zeitlich hintereinander erfasste Bilder sind.

4. Vorrichtung nach Anspruch 1, 2 oder 3, **dadurch gekennzeichnet, dass** durch die Lichtquelle (10) Lichtpulse aussendbar sind.

5. Vorrichtung nach einem der vorhergehenden Ansprüche, **dadurch gekennzeichnet, dass** die Zustandsinformation auswertbar ist, um bei bestimmten Zuständen bestimmte Reaktionen auslösen zu können, wobei die Art der Reaktion vorzugsweise von der Art des Zustandes abhängig ist.

6. Vorrichtung nach einem der vorhergehenden Ansprüche, **dadurch gekennzeichnet, dass** der Sensor (9) für die Montage im Bereich der Aufzugkabine (12; 42) ausgelegt ist, vorzugsweise für die Montage im Deckenbereich der Aufzugkabine (12; 42).

7. Vorrichtung nach einem der Ansprüche 1, 2 oder 3, **dadurch gekennzeichnet, dass** durch die Verarbeitungseinrichtung zum Auswerten ein Auswerteverfahren ausführbar ist, das vorzugsweise auf räumlich mathematischen Operationen beruht.

8. Vorrichtung nach Anspruch 7, **dadurch gekennzeichnet, dass** das Auswerteverfahren auf einem Integrationsverfahren beruht.

9. Vorrichtung nach einem der vorhergehenden Ansprüche, **dadurch gekennzeichnet, dass** die Lichtquelle Licht im Infrarotbereich abstrahlt, wobei es sich vorzugsweise um eine Leuchtdiode oder Laserdiode handelt.

10. Vorrichtung nach einem der vorhergehenden Ansprüche, **dadurch gekennzeichnet, dass** die Sensorgruppe ein Bildsensor ist, der mit einem CMOS Verarbeitungschip verbunden ist.

11. Vorrichtung nach einem der vorhergehenden Ansprüche, **dadurch gekennzeichnet, dass** zum Reduzieren von Fremdlichteinflüssen eine Doppelabtastung vorgenommen wird, bei der der zu überwachende Bereich einmal mit und einmal ohne Licht abgetastet wird.

12. Verfahren zur Überwachung eines Aufzugbereiches, wobei durch einen Sensor (9; 39; 79) Licht erfasst wird, das in dem zu überwachenden Bereich reflektiert wurde, **dadurch gekennzeichnet, dass** das Verfahren die folgenden Schritte umfasst:
- Ermitteln von dreidimensionaler Bildinformation (62) unter Berücksichtigung der Laufzeit und/oder der Phasenlage des Lichtes,
- Auswerten der dreidimensionaler Bildinformation zum Erkennen eines Zustands,
- Kategorisieren des Zustandes (66; 68),
- Auslösen einer situationsangepassten Reaktion (67; 69).

13. Verfahren nach Anspruch 12, wobei der folgende Schritt ausgeführt wird:
- Erkennen, ob sich eine Person oder ein Objekt in dem zu überwachenden Bereich befindet (64, 65).

14. Verfahren nach Anspruch 12 oder 13, wobei das Auswerten der dreidimensionalen Bildinformation auf räumlich mathematischen Operationen beruht.

15. Verfahren nach Anspruch 12, 13 oder 14, wobei mindestens einer der folgenden Zustände erkennbar ist:
- Fahrgastzahl in der Aufzugkabine oder im Zugangsbereich (Vorraum) vor einem Aufzugschacht
- Zahl der Personen, die den Aufzug betreten oder verlassen,
- direktionale Personenflüsse,
- Überlast,
- falsche Beladung,
- Behinderungen im Türbereich,
- Bedarfserfassung,
- Bewegungen,
- Türspalt
- Position der Aufzugtüre
- Schliessverhalten der Aufzugtüre
- Objekt im Bereich der Aufzugtüre.

16. Softwaremodul (90) zum Einsatz in einer Verarbeitungseinrichtung (19, 20; 50; 80) eines Aufzugs, wobei durch das Softwaremodul die folgenden Schritte ausführbar sind, wenn dieses von der Verarbeitungseinrichtung (19, 20; 50; 80) ausgeführt wird:
- Auswerten von dreidimensionaler Bildinformation (91), die von einem 3-D Sensor in einem zu überwachenden Bereich bereitgestellt wird, um den Bereichszustand zu erkennen,
- Erkennen von Personen und/oder Objekten in dem zu überwachenden Bereich (92),
- Kategorisieren (93) des Zustandes,
- Auslösen (94) einer situationsangepassten Reaktion.
